# EUROPÄISCHE PATENTANMELDUNG

(11) **EP 3 893 597 A1**
(43) Veröffentlichungstag der Anmeldung: **13.10.2021**
(21) Anmeldenummer: 21166170.7
(22) Anmeldetag: 31.03.2021
(51) Int. Cl.: H04W 88/06, H04W 88/04, H04W 4/10, H04W 4/08, H04W 12/08, H04W 84/18, H04W 84/12

(54) **MOBILES ENDGERÄT, UNTERGRUPPE VON MOBILEN ENDGERÄTEN UND VERFAHREN ZUM AUFBAU EINER KOMMUNIKATIONSGRUPPE IN EINEM DIRECT-MODE**

(30) Priorität: 06.04.2020 DE 102020109486
(71) Anmelder: peiker Holding GmbH, 61352 Bad Homburg (DE)
(72) Erfinder: RICHTER, Lutz, 15299 Mixdorf (DE)
(74) Vertreter: Otten, Roth, Dobler & Partner mbB Patentanwälte

(57) **Zusammenfassung**

Die Erfindung betrifft ein mobiles Endgerät (101, 201, 301), welches ein Mobiltelefon (102, 202, 302) und ein Zusatzgerät (103, 203, 303) umfasst. Hierbei umfasst das Zusatzgerät (103, 203, 303) ein zweites Kommunikationsmodul (112, 212, 312), wobei das zweite Kommunikationsmodul (112, 212, 312) derart ausgebildet ist, dass es als Teilnehmer (113, 213, 313) eines WLAN-Netzes (4) eine drahtlose, dritte Kommunikationsverbindung (114, 214, 314) in dieses WLAN-Netz (4) ermöglicht. (Figur 1)

## Beschreibung

Die Erfindung betrifft ein mobiles Endgerät, eine Gruppe von mobilen Endgeräten und ein Verfahren zum Aufbau einer Kommunikationsgruppe in einem Direct-Mode entsprechend dem Oberbegriff des Anspruchs 1 bzw. 2 bzw. 5.

Behörden und Organisationen mit Sicherheitsaufgaben nutzen zur Kommunikation seit einigen Jahren digitale Systeme wie zum Beispiel TETRA oder P25. Die wichtigste Applikation für die Sprachkommunikation in diesen Netzen ist push-to-talk (PTT), die Möglichkeit von Gruppenrufen und die Sprachkommunikation in einer Gruppe. Diese Systeme benötigen eine eigene, ausfallsichere Infrastruktur. Technologisch sind diese aber nur in der Lage, Sprache und Kurznachrichten zu übermitteln. Bei Netzausfall oder für Aktivitäten einer Untergruppe kann zwischen Endgeräten dieser Systeme eine Sprachkommunikation in einem sogenannten Direct-Mode erfolgen. Hierbei wird zwischen den Endgeräten unabhängig von der Infrastruktur in einem Umkreis von einigen hundert Metern direkt kommuniziert. Es wird auf einer relativ niedrigen Frequenz von einigen Hundert MHz gesendet, wobei die Endgeräte über hohe Sendeleistungen von etwa 1 W bis 1,8 W verfügen.

Auf Grund der Forderung nach breitbandiger Datenübertragung, zum Beispiel für Videoübertragungen vom Einsatzort, wird zunehmend LTE-Technologie genutzt, wobei diese Nutzung meist auf separaten Bändern erfolgt, welche bestimmten Behörden und Organisationen vorbehalten sind. Die relativ hohen Übertragungsfrequenzen und die geringe Sendeleistung der verwendeten LTE-Mobiltelefone von nur etwa 0,2 W und die spezielle Protokollstruktur lassen in LTE-Netzwerken einen praxistauglichen Direct-Mode zur direkten Kommunikation zwischen den LTE-Mobiltelefonen nicht zu.

Behörden und Organisationen nutzen oder erproben bereits LTE-Mobiltelefone. Meist sind diese LTE-Mobiltelefone auch mit einem WLAN-Kommunikationsmodul ausgerüstet, das für die Sprach- und Daten-Kommunikation in unmittelbarer Nähe eines WLAN-Hotspots oder Routers genutzt werden kann, in seiner technischen Auslegung aber nicht in der Lage ist, eine Punkt-zu-Punkt Verbindung zwischen solchen Modulen über einige hundert Meter aufzubauen. Ein praxistauglicher Direct-Mode auf der Basis der in einem Mobiltelefon verbauten WLAN-Module ist nicht möglich.

Aufgabe der Erfindung ist es, ein mobiles Endgerät bzw. eine Untergruppe von mobilen Endgeräten bzw. ein Verfahren zum Aufbau einer Kommunikationsgruppe in einem Direct-Mode vorzuschlagen, welches bzw. welche bei einer Nutzung moderner Mobilfunknetze, wie z.B. eines LTE-Netzes und einer damit verbundenen Verwendung von Mobiltelefonen Möglichkeiten für eine praxistaugliche Gruppen-Kommunikation in einem Direct-Mode bereitstellen.

Erfindungsgemäß wird diese Aufgabe ausgehend vom Oberbegriff des Anspruchs 1 bzw. 2 bzw. 5 durch die kennzeichnenden Merkmale des Anspruchs 1 bzw. 2 bzw. 5 gelöst. Zweckmäßige Ausgestaltungen sind in den jeweils abhängigen Ansprüchen angegeben.

Das erfindungsgemäße mobile Endgerät umfasst ein Mobiltelefon und ein Zusatzgerät,
- wobei das Zusatzgerät einen Lautsprecher, ein Mikrofon und eine push-to-talk-Taste umfasst,
- wobei das Mobiltelefon ein erstes Kommunikationsmodul umfasst, wobei das erste Kommunikationsmodul derart ausgebildet ist, dass eine drahtlose, erste Kommunikationsverbindung in wenigstens ein Mobilfunknetz, insbesondere ein LTE-Netz und/oder ein 5G-Netz und/oder ein P25-Netz möglich ist,
- wobei das Mobiltelefon ein zweites Kommunikationsmodul umfasst,
- wobei das Zusatzgerät einen erstes Kommunikationsmodul umfasst,
- wobei das zweite Kommunikationsmodul des Mobiltelefons und das erste Kommunikationsmodul des Zusatzgeräts derart ausgebildet sind, dass zweite Kommunikationsverbindung zwischen dem Mobiltelefon und dem Zusatzgerät besteht, wobei diese insbesondere drahtgebunden oder drahtlos hergestellt ist,
- wobei das Zusatzgerät ein zweites Kommunikationsmodul umfasst,
- wobei das zweite Kommunikationsmodul des Zusatzgeräts derart ausgebildet ist, dass es als Teilnehmer eines WLAN-Netzes eine drahtlose, dritte Kommunikationsverbindung in dieses WLAN-Netz ermöglicht.

Hierdurch ist es möglich, in einem dafür nicht vorgesehenen LTE-Netzwerk, im sogenannten Direct-Mode eine Gruppenkommunikation über das zweite Kommunikationsmodul des Zusatzgerätes zu führen, das technisch so gestaltet ist, dass auch für Frequenzen im Gigahertz-Bereich die von TETRA oder P25 Systemen gewohnten Reichweiten erreicht werden und eine Praxistauglichkeit gegeben ist.

Die erfindungsgemäße Untergruppe von mobilen Endgeräten umfasst ein erstes mobiles Endgerät und wenigstens ein zweites mobiles Endgerät,
- wobei jedes mobile Endgerät ein Mobiltelefon und ein Zusatzgerät umfasst,
- wobei jedes Zusatzgerät einen Lautsprecher, ein Mikrofon und eine PTT-Taste umfasst,
- wobei jedes Mobiltelefon ein erstes Kommunikationsmodul umfasst, wobei das erste Kommunikationsmodul derart ausgebildet ist, dass eine drahtlose, erste Kommunikationsverbindung A in wenigstens ein Mobilfunknetz - insbesondere in einem LTE-Netz und/oder einem 5G-Netz und/oder einem P25-Netz - ermöglicht ist,
- wobei jedes Mobiltelefon ein zweites Kommunikationsmodul umfasst,
- wobei jedes Zusatzgeräte ein erstes Kommunikationsmodul umfasst,
- wobei das zweite Kommunikationsmodul des Mobiltelefons und das erste Kommunikationsmodul des Zusatzgeräts derart ausgebildet sind, dass eine zweite Kommunikationsverbindung B zwischen dem jeweiligen Mobiltelefon und dem jeweiligen Zusatzgerät besteht, wobei diese insbesondere drahtgebunden oder drahtlos hergestellt ist,
- wobei jedes Zusatzgerät ein zweites Kommunikationsmodul umfasst und
- wobei jedes zweite Kommunikationsmodul jedes Zusatzgeräts derart ausgebildet ist, dass es als Teilnehmer eines WLAN-Netzes eine drahtlose, dritte Kommunikationsverbindung C in diesem WLAN-Netz ermöglicht, wobei es insbesondere vorgesehen ist, dass diese als Gruppenkommunikation zwischen mehr als zwei Teilnehmern oder als direkte Kommunikation zwischen zwei Teilnehmern erfolgt.

Hierdurch ist es möglich, unabhängig von dem Mobilfunknetz, eine Gruppenkommunikation in einem sogenannten Direct-Mode zwischen zwei und mehr Teilnehmern über die zweiten Kommunikationsmodule der Zusatzgeräte zu führen.

Weiterhin ist es vorgesehen, dass das zweite Kommunikationsmodul des Zusatzgerätes jeweils derart ausgebildet ist, dass es Routing-Fähigkeiten und/oder Repeater-Fähigkeiten und/oder Bridging-Fähigkeiten aufweist. Durch eine derartige Ausgestaltung können Daten und Sprache zwischen den Zusatzgeräten gelenkt und/oder weitergeleitet und/oder übergeben werden.

Es ist auch vorgesehen, dass wenn ein Mobiltelefon ein WLAN-Kommunikationsmodul enthält, dieses Mobiltelefon mittels dieses WLAN-Kommunikationsmoduls derart in das WLAN-Netz eingebunden ist, dass dieses Mobiltelefon als weiterer Teilnehmer an einer etablierten dritten Kommunikation einer Untergruppe teilnimmt, ohne hierzu ein Zusatzgerät mit einem ersten und einem zweiten Kommunikationsmodul zu verwenden. Damit ist die Möglichkeit geschaffen, die Gruppe von mobilen Endgeräten durch wenigstens ein zusätzliches Mobiltelefon zu ergänzen. Entsprechend ist es problemlos möglich, in die Untergruppe auch Teammitglieder aufzunehmen, welche nur mit einem herkömmlichen Mobiltelefon ausgerüstet sind. Hierbei sind die Reichweiten für Teammitglieder, welche derartige Mobiltelefone verwenden, dann durch die Leistungsfähigkeit der jeweiligen WLAN-Module bestimmt.

Bei einem erfindungsgemäßen Verfahren zum Aufbau einer Kommunikationsgruppe in einem Direct-Mode, in welche eine Untergruppe von mobilen Endgeräten aus einer Gruppe von mobilen Endgeräten eingebunden ist, ist die Zuordnung der jeweiligen mobilen Endgeräte zu einer aufgabenspezifischen Kommunikationsgruppe, welche durch die Untergruppe gebildet ist, durch eine Leitstelle oder den mit einem mobilen Endgerät ausgestatteten Einsatzleiter vorgesehen. Hierbei ist die Untergruppe insbesondere entsprechend dem Anspruch 2 oder insbesondere entsprechend den Ansprüchen 2 und 3 oder insbesondere entsprechend den Ansprüchen 2, 3 und 4 ausgebildet. Das Verfahren sieht die nachfolgend genannten Schritte vor:
- Erzeugen eines Datensatzes in einem der mobilen Endgeräte, wobei der Datensatz einen Netzwerknamen wie z.B. "Service Set Identifier", abgekürzt mit SSID, für das aufzubauenden WLAN-Netz umfasst und wobei der Datensatz spezifische Daten eines Einsatzes wie insbesondere eine Einsatzkennung umfasst,
- Übertragen des Datensatzes mittels des ersten Kommunikationsmoduls des Mobiltelefons über das Mobilfunknetz an eine Einsatzzentrale,
- Übertragen von Netzwerkbeitrittsbefehlen und dem Netzwerknamen von der Einsatzzentrale an die ersten Kommunikationsmodule der Mobiltelefone der mobilen Endgeräte der Mitglieder der durch die Einsatzkennung definierten Untergruppe,
- weitere Übertragung der Netzwerkbeitrittsbefehle und des Netzwerknamens mittels der jeweiligen zweiten Kommunikationsmodule der Mobiltelefone auf die jeweils erste Kommunikationsmodule der Zusatzgeräte,
- weitere Übertragung der Netzwerkbeitrittsbefehle und des Netzwerknamens von den jeweils ersten Kommunikationsmodulen der Zusatzgeräte an die jeweils zweiten Kommunikationsmodule der Zusatzgeräte,
- Aktivierung und Etablierung der jeweiligen zweiten Kommunikationsmodule als Teilnehmer des WLAN-Netzes mittels des empfangenen Netzwerknamens und
- Teilnahme an einer dritten Kommunikation in dem WLAN-Netz. Mit einem derartigen Verfahren lässt sich eine Gruppen-Kommunikation für eine Untergruppe im Direct-Mode einfach aufbauen.

Es ist auch vorgesehen, dass vor einer Teilnahme an der dritten Kommunikationsverbindung C in dem WLAN-Netz eine Teilnahme des mobilen Endgeräts innerhalb eines Zeitfensters durch Tastendruck bestätigt wird. Hierdurch wird sichergestellt, dass eine Statusmeldung über einen vollständigen Aufbau der Untergruppe generiert werden kann und ggf. Maßnahmen zur Vervollständigung der Untergruppe getroffen werden können.

Es ist auch vorgesehen, dass eine in dem WLAN-Netz stattfindende Gruppenkommunikation einer Untergruppe über wenigstens eines der teilnehmenden mobilen Endgeräte an die Einsatzzentrale übertragen wird. Hierdurch können rasch Notfallmaßnahmen getroffen werden, falls die Untergruppe als ganze in Schwierigkeiten kommt.

Es ist auch vorgesehen, dass ein auf einem der Mobiltelefone der Untergruppe eingehender Anruf in dem WLAN-Netz signalisiert wird und sofern dieser für die Untergruppe angenommen wird, derart in die Untergruppe übertragen wird, dass wahlweise eine Hörverbindung oder eine Sprechverbindung oder eine Hör-/Sprechverbindung für alle Teilnehmer der Untergruppe ermöglicht wird. Hierdurch ist es möglich, von außen an die Untergruppe herangetragene Informationen effektiv in der Untergruppe zu verteilen und ebenso effektiv Informationen aus der Untergruppe abzurufen.

Schließlich ist es vorgesehen, dass die Untergruppe um wenigstens ein zusätzliches Mobiltelefon erweitert wird, wobei das zusätzliche Mobiltelefon ein WLAN-Kommunikationsmodul umfasst, über welches das zusätzliche Mobiltelefon derart in das WLAN-Netz eingebunden wird, dass für dieses als zusätzlicher Teilnehmer des WLAN-Netzes eine drahtlose, dritte Kommunikationsverbindung mit diesem WLAN-Netz etabliert und aktiviert wird. Hierdurch ist es problemlos möglich, in die Untergruppe auch Teammitglieder aufzunehmen, welche nur mit einem herkömmlichen Mobiltelefon ausgerüstet sind.

Es ist ebenfalls vorgesehen, dass bei Ausfall der ersten Kommunikationsverbindung für einen oder alle Gruppenmitglieder nur noch über die dritte Kommunikationsverbindung C direkt kommuniziert wird und hierzu die zweiten Kommunikationsmodule der Zusatzgeräte und insbesondere auch das WLAN-Kommunikationsmodul wenigstes eines ggf. zusätzlichen Mobiltelefons aktiviert werden. Hierdurch lässt sich ein Ausfall eines Mobilfunknetzes teilweise kompensieren.

Im Sinne der Erfindung wird unter einem WLAN-Netz ein drahtloses Netzwerk verstanden, welches insbesondere als Ad-hoc-Netz ausgebildet ist, welches Funkknoten und Funkstrecken umfasst und welches vorzugsweise als autonomes Ad-hoc-Netz ausgebildet ist und sich selbstständig aufbaut und konfiguriert.

Im Sinne der Erfindung wird unter einer Kommunikation in einem Direct-Mode eine Kommunikation in einem WLAN-Netz, insbesondere einem WLAN-Netz ohne Access Point verstanden.

Es zeigen:
- Figur 1: eine schematische Darstellung einer erfindungsgemäßen Untergruppe von mobilen Endgeräten, welche drei erfindungsgemäße mobile Endgeräte umfasst, und
- Figur 2: nochmals die schematische Darstellung der aus der Figur 1 bekannten erfindungsgemäßen Untergruppe von drei mobilen Endgeräten, wobei diese durch ein optional vorhandenes, zusätzliches Mobiltelefon ergänzt ist.

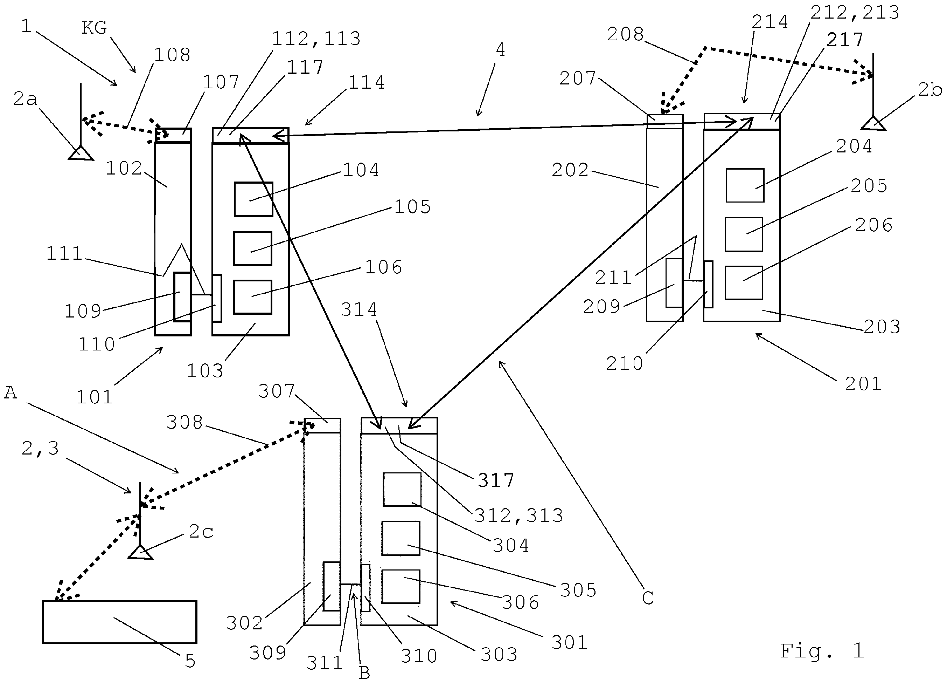

In der Figur 1 ist in schematischer Darstellung eine erfindungsgemäße Untergruppe 1 gezeigt, welche drei erfindungsgemäße mobile Endgeräten 101, 201, 301 umfasst. Hierbei umfasst jedes mobile Endgerät 101, 201, 301 jeweils ein Mobiltelefon 102, 202, 302 und ein Zusatzgerät 103, 203, 303. Jedes der Zusatzgeräte 103, 203, 303 umfasst wiederum jeweils einen Lautsprecher 104, 204, 304, ein Mikrofon 105, 205, 305 und eine PTT-Taste 106, 206, 306. Jedes der Mobiltelefone 102, 202, 302 umfasst ein erstes Kommunikationsmodul 107, 207, 307, wobei das erste Kommunikationsmodul 107, 207, 307 derart ausgebildet ist, dass eine drahtlose, erste Kommunikationsverbindung 108, 208, 308 in ein Mobilfunknetz 2 besteht, welches als LTE-Netz 3 ausgebildet ist. Somit erfolgt eine erste Kommunikation A über das Mobilfunknetz 2, welches durch drei Antennen 2a, 2b, 2c symbolisiert ist.

Jedes der Mobiltelefone 102, 202, 302 umfasst ein zweites Kommunikationsmodul 109, 209, 309 und jedes der Zusatzgeräte 103, 203, 303 umfasst einen ersten Kommunikationsmodul 110, 210, 310. Die zweiten Kommunikationsmodule 109, 209, 309 der Mobiltelefone 102, 202, 302 und die ersten Kommunikationsmodule 110, 210, 310 der Zusatzgeräte 103, 203, 303 sind derart ausgebildet, dass jeweils eine drahtlose zweite Kommunikationsverbindung B 111, 211, 311 zwischen dem Mobiltelefon 102 und dem Zusatzgerät 103 und zwischen dem Mobiltelefon 202 und dem Zusatzgerät 203 und zwischen dem Mobiltelefon 302 und dem Zusatzgerät 303 besteht. Alternativ ist statt der drahtlosen zweiten Kommunikationsverbindung auch eine drahtgebundene zweite Kommunikationsverbindung vorgesehen. Sowohl durch die drahtlose als auch durch die drahtgebundene Kommunikationsverbindung ist es möglich, die mobilen Endgeräte jeweils als zweiteilige Geräte auszubilden, so dass diese besser geeignet sind, am Körper getragen zu werden. Somit erfolgt eine zweite Kommunikation B jeweils zwischen dem Mobiltelefon 102, 202, 302 und dem jeweils zugehörigen Zusatzgerät 103, 203, 303.

Weiterhin umfasst jedes der Zusatzgeräte 103, 203, 303 ein zweites Kommunikationsmodul 112, 212, 312. Hierbei sind die zweiten Kommunikationsmodule 112, 212, 312 jeweils derart ausgebildet, dass diese als Teilnehmer 113, 213, 313 eines WLAN-Netzes 4 jeweils eine drahtlose, dritte Kommunikationsverbindung 114, 214, 314 in dieses WLAN-Netz 4 haben. Somit erfolgt ein dritte Kommunikation C zwischen den Zusatzgeräten 103, 203, 303 über das WLAN-Netz 4.

Das erfindungsgemäße Verfahren zum Aufbau einer Kommunikationsgruppe KG in einem Direct-Mode, in welche die Untergruppe 1 von mobilen Endgeräten 101, 201, 301 aus einer Gruppe von mobilen Endgeräte eingebunden ist, umfasst die Schritte:
- Erzeugen eines Datensatzes in einem der mobilen Endgeräte 101, 201, 301 der Untergruppe 1, welcher zum Aufbau eines WLAN-Netzes geeignet ist, wobei der Datensatz einen Netzwerknamen für das aufzubauende WLAN-Netz 4 umfasst und wobei der Datensatz spezifische Daten eines Einsatzes wie insbesondere eine Einsatzkennung umfasst,
- Übertragen des Datensatzes von dem ersten Kommunikationsmodul 107, 207, 307 des Mobiltelefons 102, 202, 302 über das Mobilfunknetz 2, 3 an eine Einsatzzentrale 5,
- Übertragen von Netzwerkbeitrittsbefehlen und dem Netzwerknamen von der Einsatzzentrale 5 an die ersten Kommunikationsmodule der Mobiltelefone 102, 202, 302 der mobilen Endgeräte 101, 201, 301 der Mitglieder der durch die Einsatzkennung definierten Untergruppe 1,
- weitere Übertragung der Netzwerkbeitrittsbefehle und des Netzwerknamens von dem jeweiligen zweiten Kommunikationsmodul 109, 209, 309 der Mobiltelefone 102, 202, 302 auf die jeweils ersten Kommunikationsmodule 110, 210, 310 der Zusatzgeräte 103, 203, 303,
- weitere Übertragung der Netzwerkbeitrittsbefehle und des Netzwerknamens von den jeweils ersten Kommunikationsmodulen 110, 210, 310 der Zusatzgeräte 103, 203, 303 an die jeweils zweiten Kommunikationsmodule 112, 212, 312 der Zusatzgeräte 103, 203, 303,
- Aktivierung und Etablierung der jeweiligen zweiten Kommunikationsmodule 112, 212, 312 der Zusatzgeräte 103, 203, 303 als Teilnehmer 113, 213, 313 des WLAN-Netzes 4 mittels des empfangenen Netzwerknamens und
- Teilnahme an einer dritten Kommunikation C in dem WLAN-Netz 4.

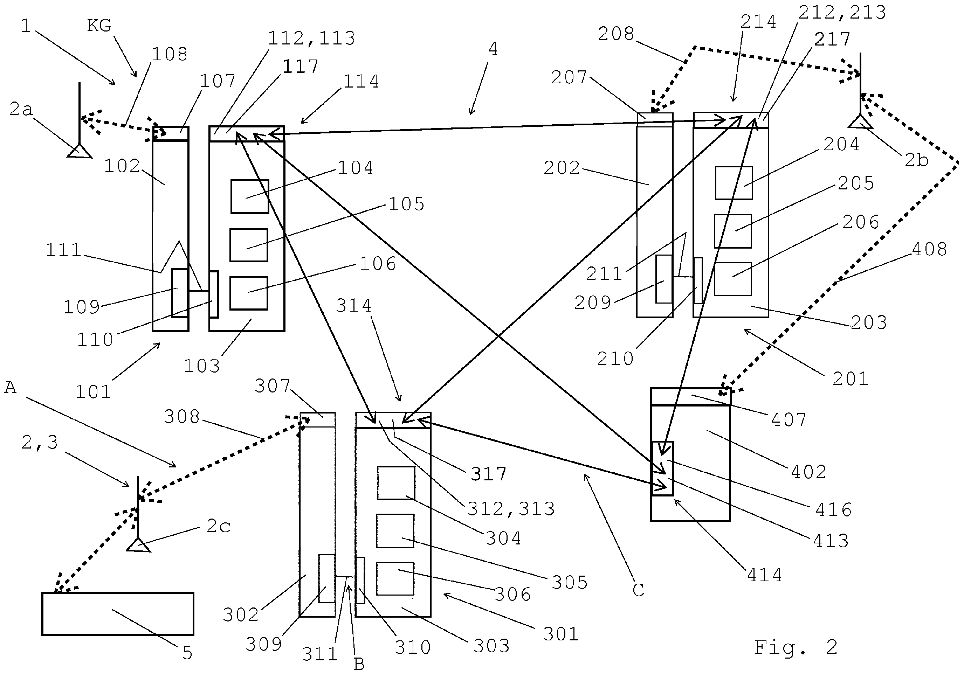

In der Figur 2 sind nochmals die aus der Figur 1 bekannten, mobilen Endgeräte 101, 201, 301 gezeigt. Insofern wird auf die Beschreibung zu der Figur 1 verwiesen. Die Untergruppe 1, welche diese drei mobilen Endgeräten 101, 201, 301 umfasst, umfasst entsprechend der in der Figur 2 gezeigten Ausführungsvariante als weiteres Mitglied der Untergruppe 1 ein zusätzliches Mobiltelefon 402. Durch dieses zusätzliche Mobiltelefon 402 ist die Untergruppe 1 optional um einen Teilnehmer 413 erweitert. Das zusätzliche Mobiltelefon 402 umfasst zusätzlich zu einem ersten Kommunikationsmodul 407 ein WLAN-Kommunikationsmodul 416, über welches das zusätzliche Mobiltelefon 402 derart in das WLAN-Netz 4 eingebunden ist, dass dieses über eine drahtlose, dritte Kommunikationsverbindung 414 an der über die dritten Kommunikationsverbindungen 114, 214, 314 der mobilen Endgeräten 101, 201, 301 etablierten dritten Kommunikation C teilnimmt.

Informationen zur Einbindung in das WLAN-Netz 4 erhält das zusätzliche Mobiltelefon 402 z.B. von der Einsatzzentrale 5 über das Mobilfunknetz 2, mit welchem das zusätzlich Mobiltelefon 402 über eine erste Kommunikationsverbindung 408 mit einem ersten Kommunikationsmodul 407 in Verbindung steht.

Die in der Figur 2 gezeigte - durch das Mobiltelefon 402 erweiterte Untergruppe 1 - kann durch weitere Teilnehmer, welche entsprechend den mobilen Endgeräten 102, 202, 303 ausgeführt sind, und/oder durch weitere Teilnehmer, welche entsprechend dem zusätzlichen Mobiltelefon 402 ausgeführt sind, erweitert sein.

Grundsätzlich wird weiter ausgeführt, dass es schon seit der Nutzung analoger Übertragungstechniken üblich ist, die Sprachkommunikation mittels eines einfachen Zubehörs, einer Kombination aus Lautsprecher, Mikrofon und push-to-talk Taste, die an der Schulter oder dem Oberkörper getragen wird, durchzuführen. Auch bei den erfindungsgemäßen mobilen Endgeräten wird zusammen mit modernen, digitalen Mobiltelefonen ein solches Zubehör als Zusatzgerät genutzt und ist drahtgebunden oder drahtlos z.B. mittels Bluetooth an das Mobiltelefon angebunden.

Um eine direkte, insbesondere eine von einem LTE-Netzwerk unabhängige Gruppen-Kommunikation in einer Untergruppe herzustellen, ist ein solches Zubehör bzw. Zusatzgerät des mobilen Endgeräts erfindungsgemäß nicht nur mit dem ersten Kommunikationsmodul zur Verbindung mit dem zweiten Kommunikationsmodul des Mobiltelefons des mobilen Endgeräts ausgestattet, sondern umfasst dieses als Zusatzgerät des mobilen Endgeräts auch das zweite Kommunikationsmodul, so dass es möglich ist, ein ad-hoc Netzwerk zu einer auf einen Einsatzort bezogenen Gruppen-Kommunikation in einer Untergruppe aufzubauen. Hierfür sind WLAN-Netzwerke geeignet, da durch die in diesen vorhandene Mesh-Funktionalität eine Gruppen-Kommunikation in einer Untergruppe an einem Einsatzort ohne Relais oder Repeater möglich ist.

Eine erste Kommunikation findet z.B. zwischen dem Mobiltelefon des mobilen Endgeräts und einer Einsatzzentrale in einem LTE-Netzwerk statt. Eine zweite Kommunikation findet zwischen dem Mobiltelefon des mobilen Endgeräts und dem Zusatzgerät des mobilen Endgeräts drahtlos oder drahtgebunden statt, so dass das Zusatzgerät zur komfortablen Kommunikation über das Mobiltelefon genutzt werden kann.

Da das Zusatzgerät des mobilen Endgeräts mit einem weiteren, zweiten Kommunikationsmodul ausgestattet ist, kann eine weitere, von einem Mobilfunknetz unabhängige, dritte Kommunikation in einem sogenannten Direct-Mode als Gruppen-Kommunikation in einer auf einen Einsatz bezogenen Untergruppe stattfinden.

Zur Vorbereitung des Direct-Mode wird die zweite Kommunikation zwischen dem Mobiltelefon des mobilen Endgeräts und dem Zusatzgerät des mobilen Endgeräts genutzt, um spezifische Daten des Zusatzgeräts über das Mobiltelefon z.B. an die Zentrale zu übertragen, damit diese in einer Untergruppe eine dritte, im Direct-Mode geführte Kommunikation in die Wege leiten kann. Hierzu werden die anderen mobilen Endgeräte, welche der Untergruppe angehören sollen, über das Mobilfunknetz von der Zentrale entsprechend informiert.

### Bezugszeichenliste:

- 1: Untergruppe
- 2: Mobilfunknetz
- 2a, 2b, 2c: Antenne von 2
- 3: LTE-Netz
- 4: WLAN-Netz
- 5: Einsatzzentrale
- 101, 201, 301: mobiles Endgerät
- 102, 202, 302: Mobiltelefon
- 103, 203, 303: Zusatzgerät
- 104, 204, 304: Lautsprecher
- 105, 205, 305: Mikrofon
- 106, 206, 306: PTT-Taste
- 107, 207, 307: 1. Kommunikationsmodul von 102, 202, 302
- 108, 208, 308: 1. Kommunikationsverbindung
- 109, 209, 309: 2. Kommunikationsmodul von 102, 202, 302
- 110, 210, 310: 1. Kommunikationsmodul von 103, 203, 303
- 111, 211, 311: 2. Kommunikationsverbindung
- 112, 212, 312: 2. Kommunikationsmodul von 103, 203, 303
- 113, 213, 313: Teilnehmer am WLAN-Netz 3
- 114, 214, 314: 3. Kommunikationsverbindung
- 402: zusätzliches Mobiltelefon
- 407: 1. Kommunikationsmodul von 402
- 408: 1. Kommunikationsverbindung
- 413: Teilnehmer
- 414: 3. Kommunikationsverbindung
- 416: WLAN-Kommunikationsmodul
- A, B, C: erste/zweite/dritte Kommunikation
- KG: Kommunikationsgruppe

## Patentansprüche

1. Mobiles Endgerät (101, 201, 301) umfassend ein Mobiltelefon (102, 202, 302) und ein Zusatzgerät (103, 203, 303),
- wobei das Zusatzgerät (103, 203, 303) einen Lautsprecher (104, 204, 304), ein Mikrofon (105, 205, 305) und eine PTT- Taste (106, 206, 306) umfasst,
- wobei das Mobiltelefon (102, 202, 302) ein erstes Kommunikationsmodul (107, 207, 307) umfasst, wobei das erste Kommunikationsmodul (107, 207, 307) derart ausgebildet ist, dass eine drahtlose, erste Kommunikationsverbindung (108, 208, 308) in wenigstens ein Mobilfunknetz (2, 3) möglich ist,
- wobei das Mobiltelefon (102, 202, 302) eine zweites Kommunikationsmodul (109, 209, 309) umfasst,
- wobei das Zusatzgerät (103, 203, 303) ein erstes Kommunikationsmodul (110, 210, 310) umfasst,
- wobei das zweite Kommunikationsmodul (109, 209, 309) des Mobiltelefons (102, 202, 302) und das erste Kommunikationsmodul (110, 210, 310) des Zusatzgerätes (103, 203, 303) derart ausgebildet sind, dass eine zweite Kommunikationsverbindung (111, 211, 311) zwischen dem Mobiltelefon (102, 202, 302) und dem Zusatzgerät (103, 203, 303) besteht,
**dadurch gekennzeichnet,**
- **dass** das Zusatzgerät (103, 203, 303) ein zweites Kommunikationsmodul (112, 212, 312) umfasst,
- wobei dieses zweite Kommunikationsmodul (112, 212, 312) derart ausgebildet ist, dass es als Teilnehmer (113, 213, 313) eines WLAN-Netzes (4) eine drahtlose, dritte Kommunikationsverbindung (114, 214, 314) in dieses WLAN-Netz (4) ermöglicht.

2. Untergruppe (1) von mobilen Endgeräten (101, 201, 301) umfassend eine erstes mobiles Endgerät (101) und wenigstens ein zweites mobiles Endgerät (201),
- wobei jedes mobile Endgerät (101, 201, 301) ein Mobiltelefon (102, 202, 302) und ein Zusatzgerät (103, 203, 303) umfasst,
- wobei jedes Zusatzgerät (103, 203, 303) einen Lautspreche (104, 204, 304), ein Mikrofon (105, 205, 305) und eine PTT-Taste (106, 206, 306) umfasst,
- wobei jedes Mobiltelefon (102, 202, 302) ein erstes Kommunikationsmodul (107, 207, 307) umfasst, wobei das erste Kommunikationsmodul (107, 207, 307) derart ausgebildet ist, dass eine drahtlose, erste Kommunikationsverbindung (108, 208, 308) in wenigstens ein Mobilfunknetz (2, 3) ermöglicht ist,
- wobei jedes Mobiltelefon (102, 202, 302) ein zweites Kommunikationsmodul (109, 209, 309) umfasst,
- wobei jedes Zusatzgeräte (103, 203, 303) ein erstes Kommunikationsmodul (110, 210, 310) umfasst,
- wobei das zweite Kommunikationsmodul (109, 209, 309) des Mobiltelefons (102, 202, 302) und das erste Kommunikationsmodul (110, 210, 310) des Zusatzgeräts (103, 203, 303) jeweils derart ausgebildet sind, dass eine zweite Kommunikationsverbindung (111, 211, 311) zwischen dem jeweiligen Mobiltelefon (102, 202, 302) und dem jeweiligen Zusatzgerät (103, 203, 303) besteht,
**dadurch gekennzeichnet,**
- **dass** jedes Zusatzgerät (103, 203, 303) ein zweites Kommunikationsmodul (112, 212, 312) umfasst,
- wobei jedes dieser zweiten Kommunikationsmodule (112, 212, 312) der Zusatzgeräte (103, 203, 303) derart ausgebildet ist, dass es als Teilnehmer (113, 213, 313) eines WLAN-Netzes (4) eine drahtlose, dritte Kommunikationsverbindung (114, 214, 314) in diesem WLAN-Netz (4) ermöglicht.

3. Untergruppe von mobilen Endgeräten nach Anspruch 2, **dadurch gekennzeichnet, dass** das zweite Kommunikationsmodul (112, 212, 312) des Zusatzgeräts (103, 203, 303) jeweils derart ausgebildet ist, dass es Routing-Fähigkeiten und/oder Repeater-Fähigkeiten und/oder Bridging-Fähigkeiten aufweist.

4. Untergruppe von mobilen Endgeräten (101, 201, 301) nach Anspruch 3 oder den Ansprüchen 2 und 3, **dadurch gekennzeichnet, dass** die Untergruppe (1) als weiteren Teilnehmer (413) an der dritten Kommunikation (C) ein zusätzliches Mobiltelefon (402) umfasst, wobei diese zusätzlich zu einem ersten Kommunikationsmodul (407) ein WLAN-Kommunikationsmodul (416) umfasst, wobei das zusätzliche Mobiltelefon (402) mittels des WLAN-Kommunikationsmoduls (416) in das WLAN-Netz (4) eingebunden ist.

5. Verfahren zum Aufbau einer Kommunikationsgruppe (KG) in einem Direct-Mode, in welche eine Untergruppe (1) von mobilen Endgeräten (101, 201, 301) aus einer Gruppe von mobilen Endgeräte (101, 201, 301) eingebunden ist, wobei die Untergruppe (1) insbesondere entsprechend dem Anspruch 2 oder insbesondere entsprechend den Ansprüchen 2 und 3 oder insbesondere entsprechend den Ansprüchen 2, 3 und 4 ausgebildet ist, umfassend die Schritte:
- Erzeugen eines Datensatzes in einem der mobilen Endgeräte (101, 201, 301) der Untergruppe (1), welcher zum Aufbau eines WLAN-Netzes geeignet ist, wobei der Datensatz einen Netzwerknamen für das aufzubauende WLAN-Netz (4) umfasst und wobei der Datensatz spezifische Daten eines Einsatzes wie insbesondere eine Einsatzkennung umfasst,
- Übertragen des Datensatzes von dem ersten Kommunikationsmodul (107, 207, 307) des Mobiltelefons (102, 202, 302) über das Mobilfunknetz (2, 3) an eine Einsatzzentrale (5),
- Übertragen von Netzwerkbeitrittsbefehlen und dem Netzwerknamen von der Einsatzzentrale (5) an die ersten Kommunikationsmodule der Mobiltelefone (102, 202, 302) der mobilen Endgeräte (101, 201, 301) der Mitglieder der durch die Einsatzkennung definierten Untergruppe (1),
- weitere Übertragung der Netzwerkbeitrittsbefehle und des Netzwerknamens von dem jeweiligen zweiten Kommunikationsmodul (109, 209, 309) der Mobiltelefone (102, 202, 302) auf die jeweils ersten Kommunikationsmodule (110, 210, 310) der Zusatzgeräte (103, 203, 303),
- weitere Übertragung der Netzwerkbeitrittsbefehle und des Netzwerknamens von den jeweils ersten Kommunikationsmodulen (110, 210, 310) der Zusatzgeräte (103, 203, 303) an die jeweils zweiten Kommunikationsmodule (112, 212, 312) der Zusatzgeräte (103, 203, 303),
- Aktivierung und Etablierung der jeweiligen zweiten Kommunikationsmodule (112, 212, 312) der Zusatzgeräte (103, 203, 303) als Teilnehmer (113, 213, 313) des WLAN-Netzes (4) mittels des empfangenen Netzwerknamens und
- Teilnahme an einer dritten Kommunikation (C) in dem WLAN-Netz (4) .

6. Verfahren nach Anspruch 5, **dadurch gekennzeichnet, dass** vor einer Teilnahme an der dritten Kommunikation (C) in dem WLAN-Netz (4) eine Teilnahme des mobilen Endgeräts (101, 201, 301) innerhalb eines Zeitfensters durch Tastendruck bestätigt wird.

7. Verfahren nach Anspruch 5 oder den Ansprüchen 5 und 6, **dadurch gekennzeichnet, dass** eine in dem WLAN-Netz (4) stattfindende Gruppenkommunikation einer Untergruppe (1) über wenigstens eines der mobilen Endgeräte (101, 201, 301) an die Einsatzzentrale (5) übertragen wird.

8. Verfahren nach wenigstens einem der vorhergehenden Verfahrensansprüche, **dadurch gekennzeichnet, dass** ein auf einem der Mobiltelefone (102, 202, 302) der Untergruppe (1) eingehender Anruf in dem WLAN-Netz (4) signalisiert wird und sofern dieser für die Untergruppe (1) angenommen wird, derart in die Untergruppe (1) übertragen wird, dass wahlweise eine Hörverbindung oder eine Sprechverbindung oder eine Hör-/Sprechverbindung für alle Teilnehmer (113, 213, 313) der Untergruppe (1) ermöglicht wird.

9. Verfahren nach wenigstens einem der vorhergehenden Verfahrensansprüche, **dadurch gekennzeichnet, dass** die Untergruppe (1) um wenigstens ein zusätzliches Mobiltelefon (402) erweitert wird, wobei das zusätzliche Mobiltelefon (402) ein WLAN-Kommunikationsmodul (416) umfasst, über welches das zusätzliche Mobiltelefon (402) derart in das WLAN-Netz (4) eingebunden wird, dass für dieses als zusätzlichen Teilnehmer (413) des WLAN-Netzes (4) eine drahtlose, dritte Kommunikationsverbindung (C) mit diesem WLAN-Netz (4) aktiviert und etabliert wird.

10. Verfahren nach wenigstens einem der vorhergehenden Verfahrensansprüche, **dadurch gekennzeichnet, dass** bei Ausfall der ersten Kommunikationsverbindung (A) für ein Mitglied der Untergruppe (1) oder für alle Mitglieder der Untergruppe (1) in der Untergruppe (1) nur noch über die dritte Kommunikationsverbindung (C) direkt kommuniziert wird und hierzu die zweiten Kommunikationsmodule (112, 212, 312) der Zusatzgeräte (103, 203, 303) und insbesondere auch das WLAN-Kommunikationsmodul (416) wenigstens eines ggf. zusätzlichen Mobiltelefons (402) aktiviert werden.
